# EUROPEAN PATENT APPLICATION

(11) **EP 4 815 154 A1**
(43) Date of publication of application: **30.09.2026**
(21) Application number: 24895815.9
(22) Date of filing: 26.08.2024
(51) Int. Cl.: H01M 50/30, H01M 50/271

(54) **BATTERY CELL, BATTERY, ELECTRICAL APPARATUS, AND BATTERY CELL PRODUCTION METHOD**

(30) Priority: 30.11.2023 CN 202311643162
(71) Applicant: Contemporary Amperex Technology Co., Limited, Ningde, Fujian 352100 (CN)
(72) Inventor: XING, Chengyou, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2024/114544
(87) International publication number: WO 2025/112714

(57) **Abstract**

A battery cell (20), a battery (100), an electrical apparatus, and a production method for a battery cell (20). The battery cell (20) comprises a casing (22), an electrode assembly (23), an air-permeable valve assembly (212), and a protective component (213); the casing (22) is provided with an accommodating cavity (222); the casing (22) comprises a first wall (211); the first wall (211) is provided with a first surface (2111) and a second surface (2112) that face away from each other, the second surface (2112) faces the outside of the battery cell (20); a first vent hole (2113) is formed in the first wall (211); the first vent hole (2113) passes through the first surface (2111) and the second surface (2112); the electrode assembly (23) is accommodated in the accommodating cavity (222); the air-permeable valve assembly (212) is connected to the first wall (211) and covers the first vent hole (2113); the protective component (213) is detachably connected to the second surface (2112) and covers the air-permeable valve assembly (212). The detachable protective component (213) is provided to protect the air-permeable valve assembly (212), thereby reducing the possibility that foreign matter and impurities enter the air-permeable valve assembly (212) and impact the venting function during the production process of the battery cell (20), and improving the reliability of the air-permeable valve assembly (212).

## Description

### CROSS-REFERENCE TO RELATED APPLICATIONS

The present application claims priority to Chinese Patent Application No. 202311643162.2 filed on November 30, 2023 and entitled "BATTERY CELL, BATTERY, ELECTRICAL APPARATUS, AND BATTERY CELL PRODUCTION METHOD", which is incorporated herein by reference in its entirety.

### TECHNICAL FIELD

The present application relates to the field of battery technologies, and more specifically, to a battery cell, a battery, an electrical apparatus, and a battery cell production method.

### BACKGROUND

Battery cells are widely used in electronic devices such as mobile phones, laptops, electric bicycles, electric vehicles, electric aircrafts, electric ships, electric toy cars, electric toy ships, electric toy aircrafts, and electric tools.

In order to reduce internal pressure of a battery cell, some battery cells are provided with a vent valve assembly. However, during production of the battery cell, foreign matter is likely to enter the vent valve assembly, thereby affecting the venting function of the vent valve assembly and even causing damage to the vent valve assembly.

### SUMMARY

The present application provides a battery cell, a battery, an electrical apparatus, and a battery cell production method, which can reduce a risk of damage to the vent valve assembly on the battery cell.

According to a first aspect, embodiments of the present application provide a battery cell, including: a housing having an accommodating cavity, where the housing includes a first wall, the first wall has a first surface and a second surface opposite to each other, the second surface faces outside the battery cell, the first wall is provided with a first vent hole, and the first vent hole extends through the first surface and the second surface; an electrode assembly accommodated in the accommodating cavity; a vent valve assembly connected to the first wall and covering the first vent hole; and a protective member, detachably connected to the second surface and covering the vent valve assembly. By providing a detachable protective member to protect the second vent hole, a possibility of foreign matter entering the vent valve assembly during production of the battery cell and affecting its venting function is reduced, thereby improving the reliability of the vent valve assembly.

In some embodiments, the protective member is bonded to the second surface, snap-fitted to the second surface, or connected to the second surface via a connecting member, and the connecting member is detachably connected to the first wall and the protective member, respectively. By implementing detachable connection between the protective member and the second surface through bonding, snap-fitting, or the connecting member, the structure is simple and facilitates assembly and disassembly operations.

In some embodiments, the protective member is bonded to the second surface, the protective member includes a protective layer and an adhesive layer, and the adhesive layer is connected to a side of the protective layer facing the second surface and bonded to the second surface. Bonding the protective member to the second surface facilitates the installation and removal of the protective member.

In some embodiments, the adhesive layer is arranged around the first vent hole. By arranging the adhesive layer around the first vent hole, the adhesive layer and the protective layer form a relatively sealed space, such that the first vent hole can be better protected, thereby further reducing a possibility that foreign matter enters the first vent hole during production of the battery cell.

In some embodiments, the protective layer includes a body and an extension tab. The body is connected to the second surface, and the extension tab is connected to an edge of the body and forms a gap with the second surface. By providing the extension tab, during the removal of the protective member, an operator or operating tool can grip the extension tab to directly remove the protective member, improving the removal efficiency of the protective member.

In some embodiments, from one end of the extension tab connected to the body to the other end of the extension tab away from the body, a dimension of the gap in a first direction gradually increases, and the first direction is an arrangement direction from the first surface to the second surface. By configuring the gap between the extension tab and the second surface to gradually increase in dimension in the first direction, the extension tab forms an upturned structure, thereby further facilitating gripping of the extension tab by an operator or an operating device and further improving removal efficiency of the protective member.

In some embodiments, the protective member is provided with a through hole. The through hole extends through the protective member along a first direction, and the first direction is an arrangement direction from the first surface to the second surface. The through hole may be used to communicate the first vent hole with the vent valve assembly, so that the working performance of the vent valve assembly in these embodiments can be tested prior to installation of an insulating patch.

In some embodiments, a maximum dimension of the through hole along a second direction is smaller than a maximum dimension of the first vent hole along the second direction, and the second direction is parallel to the first surface and parallel to or intersecting with an extending direction of the first wall. By designing the maximum dimension of the through hole to be smaller than the maximum dimension of the first vent hole, a possibility of foreign matter directly entering the first vent hole through the through hole is reduced.

In some embodiments, the maximum dimension of the through hole along the second direction is less than or equal to 1 mm. By designing the maximum dimension of the through hole along the second direction to be the above value, a possibility of foreign matter entering the through hole can be further reduced.

In some embodiments, the vent valve assembly includes: a first valve body connected to the first wall and provided with a second vent hole, where the second vent hole extends through the first valve body along the first direction and communicating with the first vent hole, and the first direction is an arrangement direction from the first surface to the second surface; and a breathable membrane layer connected to a side of the first valve body away from the first wall and covering the second vent hole. By configuring the vent valve assembly to include the first valve body and the breathable membrane layer, not only can the exhaust function be achieved, but also an overall dimension of the vent valve in the first direction is small under such a structure, reducing the impact on installation of other auxiliary structures of the end cover assembly.

In some embodiments, the first surface is sequentially provided with a first groove and a second groove in communication with each other along the first direction, the second groove communicates with the first vent hole, in the second direction, a maximum dimension of the first groove is greater than a maximum dimension of the second groove, a maximum dimension of the second groove is greater than a maximum dimension of the first vent hole, and the second direction is parallel to the first surface and parallel to or intersecting with an extending direction of the first wall; and the first valve body is at least partially received in the first groove. By providing the first groove and the second groove, the first valve body located in the first groove communicates with the first vent hole through the second groove, and dimensions of the first valve body, the second groove, and the first vent hole in the second direction gradually decrease, thereby facilitating concentrated discharge of gas.

In some embodiments, a plurality of the second vent holes are provided. Providing a plurality of the second vent holes is beneficial for gas discharge.

In some embodiments, one of the plurality of second vent holes is located in a middle of the first valve body, and the remaining second vent holes are arranged around the second vent hole located in the middle of the first valve body. By employing such a structural form, an arrangement density of the second vent holes can be increased to a certain extent, thereby further facilitating entry of gas into the second groove through the second vent holes.

In some embodiments, the battery cell further includes an insulating member connected to the first wall, the insulating member is provided with a third vent hole, and the vent valve assembly is located between the first wall and the insulating member and communicates with the third vent hole. By arranging the vent valve assembly between the first wall and the insulating member, the stability of the vent valve assembly after installation can be improved.

In some embodiments, a projection of the second vent hole on the insulating member along the first direction is located within the third vent hole. Such a structure enables a diameter of the fifth vent hole to be greater than or equal to a diameter of the fourth vent hole, thereby facilitating entry of gas in the battery cell into the vent valve assembly through the fifth vent hole and improving venting efficiency.

In some embodiments, the battery cell further includes a pressure relief mechanism, the first wall is provided with a fourth vent hole, and the pressure relief mechanism seals the fourth vent hole. The pressure relief mechanism can be used to discharge gas when the internal pressure of the battery cell is excessively high, thereby reducing a risk of rupture of the battery cell due to excessive internal pressure.

In some embodiments, the first wall is an end cover body of an end cover assembly or a wall of the housing.

According to a second aspect, embodiments of the present application further provide a battery, including the battery cell according to any one of the above technical solutions.

According to a third aspect, embodiments of the present application further provide an electrical apparatus, including the above battery, and the battery is configured to supply electrical energy.

According to a fourth aspect, embodiments of the present application further provide a battery cell production method, including the following steps: covering a protective member over a first vent hole of a battery cell, where the first vent hole is in communication with a vent valve assembly, and the vent valve assembly is configured to discharge gas from inside the battery cell to outside; and removing the protective member.

In some embodiments, before the removing the protective member, the method further includes performing a sealing nail welding process on the battery cell.

In some embodiments, after the removing the protective member, the method further includes performing an insulating film wrapping process on the battery cell.

### BRIEF DESCRIPTION OF DRAWINGS

To describe technical solutions in embodiments of the present application more clearly, the following briefly describes the accompanying drawings required for describing the embodiments of the present application. Apparently, the accompanying drawings in the following description show merely some embodiments of the present application, and persons of ordinary skill in the art may still derive other drawings from the accompanying drawings without creative efforts.
FIG. 1 is a schematic structural diagram of a vehicle according to some embodiments of the present application;
FIG. 2 is a schematic structural diagram of a battery according to some embodiments of the present application;
FIG. 3 is a schematic structural diagram of a battery cell according to some embodiments of the present application;
FIG. 4 is an exploded schematic structural diagram of an end cover assembly according to some embodiments of the present application;
FIG. 5 is a schematic structural diagram of an end cover assembly according to some embodiments of the present application;
FIG. 6 is a cross-sectional view taken along line A-A of FIG. 5;
FIG. 7 is a schematic structural diagram of an end cover assembly with a protective member removed according to some embodiments of the present application;
FIG. 8 is a cross-sectional view taken along line B-B of FIG. 7;
FIG. 9 is an exploded schematic structural diagram of an end cover assembly according to some embodiments of the present application;
FIG. 10 is a schematic structural diagram of a protective member of a battery cell according to some embodiments of the present application;
FIG. 11 is a schematic diagram of connection between a protective member and a second surface of a battery cell according to some embodiments of the present application;
FIG. 12 is a schematic structural diagram of a vent valve assembly of a battery cell according to some embodiments of the present application; and
FIG. 13 is a flowchart of a battery cell production method according to some embodiments of the present application.

Reference signs in accompanying drawings of specific embodiments are as follows:
1000. vehicle;
100. battery;
10. enclosure; 11. first portion; 12. second portion;
20. battery cell; 21. end cover assembly; 211. first wall; 2111. first surface; 21111. first groove; 21112. second groove; 2112. second surface; 2113. first vent hole; 2114. fourth vent hole; 212. vent valve assembly; 2121. first valve body; 21211. second vent hole; 2122. breathable membrane layer; 213. protective member; 2131. protective layer; 21311. through hole; 21312. body; 21313. extension tab; 21314. gap; 2132. adhesive layer; 214. insulating member; 2141. third vent hole; 2142. venting structure; 215. pressure relief mechanism; 216. insulating patch; 21a. electrode terminal; 22. housing; 221. opening; 222. accommodating cavity; 22a. first insulating film layer; 22b. second insulating film layer; 23. electrode assembly; 24. adapter sheet;
200. controller;
300. motor;
X. first direction; and Y. second direction.

### DESCRIPTION OF EMBODIMENTS

To make the objectives, technical solutions, and advantages of some embodiments of the present application clearer, the following clearly describes the technical solutions in some embodiments of the present application with reference to the accompanying drawings in some embodiments of the present application. Apparently, these embodiments described are some rather than all embodiments of the present application. All other embodiments obtained by persons of ordinary skill in the art based on the embodiments of the present application without creative efforts shall fall within the protection scope of the present application.

Unless otherwise defined, all technical and scientific terms used in the present application have the same meanings as those commonly understood by persons skilled in the art of the present application. The terms used in the specification of the present application are only for the purpose of describing specific embodiments, and are not intended to limit the present application. The terms "include" and "have" and any variations thereof in the specification and claims of the present application and the above description of the accompanying drawings are intended to cover non-exclusive inclusions. The terms "first", "second", and the like in the specification and claims of the present application or the above accompanying drawings are used to distinguish different objects, rather than to describe specific sequences or primary and secondary relationships.

Reference to "embodiment" in the present application means that a particular feature, structure, or characteristic described in combination with the embodiment can be included in at least one embodiment of the present application. The word "embodiment" appearing in various positions in the specification does not necessarily refer to the same embodiment or an independent or alternative embodiment that is mutually exclusive with other embodiments.

In the description of the present application, it should be noted that, unless otherwise clearly specified and limited, the terms "install", "connect", "couple", and "attach" should be understood in a broad sense, for example, they may be fixed connections, detachable connections, or integrated connections; they may be direct connections, or indirect connections through intermediate mediums, or may be internal connections between two components. For ordinary persons skilled in the art, the specific meanings of the above terms in the present application can be understood according to specific circumstances.

The term "and/or" in the present application is only an associative relationship for describing associated objects, indicating that three relationships may be present. For example, A and/or B may indicate three cases: presence of only A; presence of both A and B; and presence of only B. In addition, the character "/" in the present application generally indicates an "or" relationship between contextually associated objects.

In the embodiments of the present application, the same reference numerals indicate the same components, and for brevity, detailed descriptions of the same components in different embodiments are not repeated. It should be understood that as shown in the accompanying drawings, sizes such as thickness, length, and width of various components and sizes such as thickness, length, and width of integrated devices in the embodiments of the present application are merely for illustrative purposes and should not constitute any limitations on the present application.

In the present application, "a plurality of" means more than two (inclusive).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of the present application. The battery cell may be cylindrical, flat, cuboid, or of other shapes, and this is also not limited in the embodiments of the present application.

The battery mentioned in the embodiments of the present application refers to a single physical module that includes one or more battery cells to provide higher voltage and capacity. For example, the battery mentioned in the present application may include a battery module, a battery pack, or the like. The battery generally includes an enclosure for packaging one or more battery cells. The enclosure can prevent liquids or other foreign matter from affecting charging or discharging of the battery cell.

The battery cell mentioned in the embodiments of the present application may include an electrode assembly and an electrolyte, and the electrode assembly includes a positive electrode sheet, a negative electrode sheet, and a separator. The battery cell operates mainly relying on movement of metal ions between the positive electrode sheet and the negative electrode sheet. The positive electrode sheet includes a positive current collector and a positive active substance layer, and the positive active substance layer is coated on the surface of the positive current collector; the positive current collector includes a positive coating region and a positive tab connected to the positive coating region, the positive coating region is coated with the positive active substance layer, and the positive tab is not coated with the positive active substance layer. Taking the lithium-ion battery cell as an example, the positive current collector may be made of aluminum, the positive active substance layer includes a positive active substance, and the positive active substance may be lithium cobaltate, lithium iron phosphate, ternary lithium, or lithium manganate, or the like. The negative electrode sheet includes a negative current collector and a negative active substance layer, and the negative active substance layer is coated on the surface of the negative current collector; the negative current collector includes a negative coating region and a negative tab connected to the negative coating region, the negative coating region is coated with the negative active substance layer, and the negative tab is not coated with the negative active substance layer. The negative current collector may be made of copper, the negative active substance layer includes a negative active substance, and the negative active substance may be carbon or silicon, or the like. The separator may be made of PP (polypropylene, polypropylene) or PE (polyethylene, polyethylene), or the like.

At present, the application of power batteries is becoming more and more widespread. Power batteries are not only applied to energy storage power systems such as hydropower, thermal power, wind power, and solar power stations, but also widely applied to electric transportation tools such as electric bicycles, electric motorcycles, electric vehicles, and many fields such as military equipment and aerospace. With the continuous expansion of the application fields of power batteries, the market demand is also constantly increasing.

The battery cell is an important component of the power battery. During the cycle process of the battery cell, abnormal conditions may occur. For example, after the battery cell undergoes multiple charge-discharge cycles, side reactions may occur inside the battery cell and gas may continue to be generated, the gas will increase the internal pressure of the battery cell, thereby causing the risk of housing deformation and rupture.

At present, battery cells are each provided with a pressure relief mechanism. The pressure relief mechanism of a battery cell releases pressure when abnormal pressure is generated inside the battery, reducing a possibility of explosion or danger caused by overpressure of the battery cell. However, when the pressure relief mechanism is opened, it means that internal pressure of the battery cell has reached an abnormal level. At this point, the battery cell becomes unable to continue operating as the pressure relief mechanism is opened, thereby resulting in termination of the service life thereof.

Therefore, how to continuously reduce internal pressure of the battery cell, thereby reducing a possibility of premature opening of the pressure relief mechanism and thus prolonging the service life of the battery cell, has become an important research topic in research and development of battery cells and related components thereof.

In view of this, the present application provides a technical solution in which a first vent hole for auxiliary venting is provided on a first wall of the battery cell, and a vent valve assembly is mounted at the first vent hole, so that gas inside the battery cell can flow out through the vent valve assembly, thereby reducing internal pressure of the battery cell, reducing a possibility of premature opening of the pressure relief mechanism, and improving the service life of the battery cell.

The battery cell described in the embodiments of the present application is applicable to batteries and electrical apparatuses using batteries.

The electrical apparatus may be a vehicle, a mobile phone, a portable device, a notebook computer, a ship, a spacecraft, an electric toy, an electric tool, and the like. The vehicle may be a fuel vehicle, a gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of the present application impose no special limitation on the above electrical apparatus.

For ease of description, the electrical apparatus being a vehicle is used as example for description of the following embodiments.

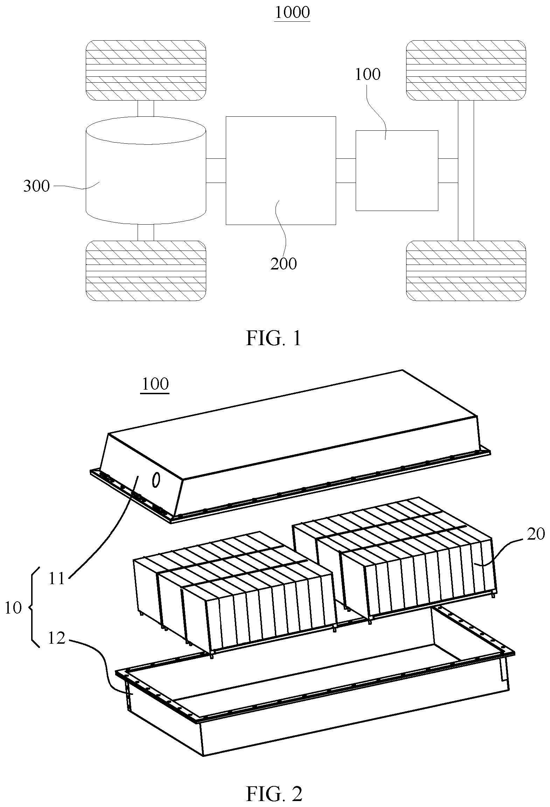

As shown in FIG. 1, the vehicle 1000 may be a fuel vehicle, a gas vehicle, or a new energy vehicle, and the new energy vehicle may be a pure electric vehicle, a hybrid electric vehicle, a range-extended vehicle, or the like. The vehicle 1000 is provided with a battery 100 inside, and the battery 100 may be positioned at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present application, the battery 100 can serve not only as an operational power source for the vehicle 1000 but also as a driving power source for the vehicle 1000, replacing or partially replacing fuel or natural gas to provide driving traction for the vehicle 1000.

As shown in FIG. 2, the battery 100 includes an enclosure 10 and battery cells 20, where the battery cells 20 are accommodated in the enclosure 10. The enclosure 10 is configured to provide an accommodating space for the battery cells 20. The enclosure 10 may be a variety of structures. In some embodiments, the enclosure 10 may include a first portion 11 and a second portion 12. The first portion 11 and the second portion 12 are fitted together so that the first portion 11 and the second portion 12 jointly define a space for accommodating the battery cells 20. The second portion 12 may be a hollow structure with one end open, and the first portion 11 may be a platelike structure, where the first portion 11 covers the open side of the second portion 12 for the first portion 11 and the second portion 12 to jointly define an accommodating space. Alternatively, the first portion 11 and the second portion 12 may both be hollow structures with one side open, where the open side of the first portion 11 is engaged with the open side of the second portion 12. The enclosure 10 formed by the first portion 11 and the second portion 12 may be of various shapes, such as cylinder or cuboid.

In the battery 100, the battery cells 20 may be present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the enclosure 10. Alternatively, the battery 100 may be formed by a plurality of battery cells 20 connected in series, parallel, or series-parallel first to form a battery module, and then a plurality of battery modules are connected in series, parallel, or series-parallel to form a whole accommodated in the enclosure 10. The battery 100 may further include other structures, for example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, but is not limited thereto. The battery cell 20 may be cylindrical, flat, rectangular, or of other shapes.

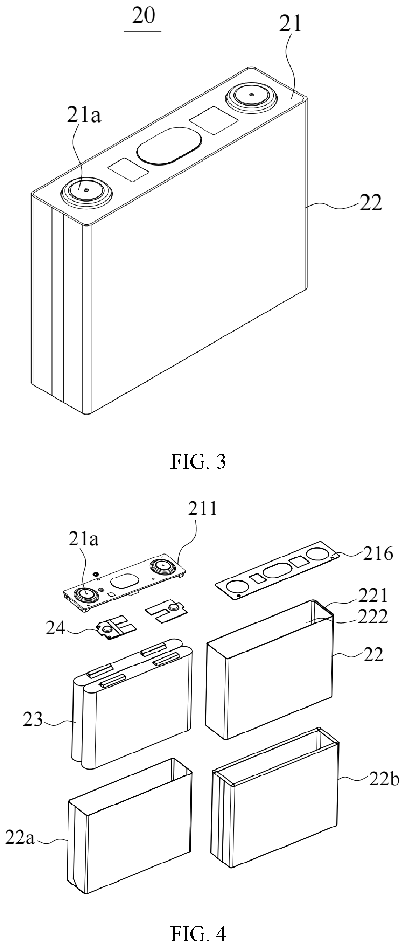

As shown in FIG. 3 to FIG. 9, embodiments of the present application provide a battery cell 20, including a housing 22, an electrode assembly 23, a vent valve assembly 212, and a protective member 213. The housing 22 has an accommodating cavity 222, and the housing 22 includes a first wall 211. The first wall 211 has a first surface 2111 and a second surface 2112 opposite to each other, the second surface 2112 faces outside the battery cell 20, the first wall 211 is provided with a first vent hole 2113, and the first vent hole 2113 extends through the first surface 2111 and the second surface 2112. The electrode assembly 23 is accommodated in the accommodating cavity 222. The vent valve assembly 212 is connected to the first wall 211 and covers the first vent hole 2113. The protective member 213 is detachably connected to the second surface 2112 and covers the vent valve assembly 212.

The housing 22 may be of various shapes and sizes, such as a rectangular shape, a cylindrical shape, and a hexagonal prism shape. Specifically, the shape of the housing 22 may be determined according to a specific shape and size of the electrode assembly 23. The housing 22 may be made of various materials, such as copper, iron, aluminum, stainless steel, and aluminum alloy, and the materials are not particularly limited in the embodiments of the present application. In some examples, an inner side of the housing 22 may be provided with a first insulating film layer 22a, and an outer side thereof may be provided with a second insulating film layer 22b.

The electrode assembly 23 is a component in the battery 100 in which electrochemical reactions occur. The housing 22 may contain one or more electrode assemblies 23.

The first wall 211 in these embodiments may be a side wall or a bottom wall of the housing 22, or may be an end cover body of an end cover assembly 21 in the housing 22. The following description takes an example in which the first wall 211 is the end cover body of the end cover assembly 21.

The end cover assembly 21 refers to a component that covers an opening 221 of the housing 22 to isolate an internal environment of the battery cell 20 from an external environment. Without limitation, the shape of the end cover assembly 21 may be adapted to the shape of the opening 221 of the housing 22 so as to fit the opening 221. Optionally, the end cover assembly 21 may be made of a material (such as aluminum alloy) with a certain hardness and strength, so that the end cover assembly 21 is less likely to deform when subjected to extrusion or collision, enabling the battery cell 20 to have higher structural strength and improved safety performance. Functional components such as electrode terminals 21a may be arranged on the end cover assembly 21. The electrode terminal 21a may be electrically connected to the electrode assembly 23 through an adapter sheet 24 for outputting or inputting electrical energy of the battery cell 20.

The first wall 211 in these embodiments may be made of a material (such as aluminum alloy) with a certain hardness and strength. The first wall 211 has a first surface 2111 and a second surface 2112 opposite to each other, and after the battery cell 20 is assembled, the first surface 2111 of the first wall 211 faces the electrode assembly 23 of the battery cell 20. The first wall 211 may have a rectangular plate shape as shown in the figure, or may have other shapes, which may be specifically determined according to a shape of the opening 221 of the housing 22 of the battery cell 20 and are not enumerated one by one in these embodiments.

Electrode terminals 21a are mounted at both ends of the first wall 211, the above-mentioned first vent hole 2113 is provided between the two electrode terminals 21a, the vent valve assembly 212 is connected to the first wall 211 and covers the first vent hole 2113, and the vent valve assembly 212 may be connected to the first surface 2111.

When internal pressure of the battery cell 20 increases, part of gas inside the battery cell 20 may be discharged from the vent valve assembly 212 to the first vent hole 2113 along the first direction X, and finally discharged out of the battery cell 20 through the first vent hole 2113, so as to reduce the internal pressure of the battery cell 20, thereby reducing a risk that the battery 100 becomes unusable due to opening of the pressure relief mechanism 215 caused by excessive pressure, which is beneficial for improving the stability and service life of the battery cell 20.

The protective member 213 may be made of metal or plastic. The protective member 213 is connected to the second surface 2112 of the first wall 211, and may be removed after the battery cell 20 is assembled and before installation of the insulating patch 216.

In some examples, the protective member 213 is bonded to the second surface 2112, snap-fitted to the second surface 2112, or connected to the second surface 2112 via a connecting member, and the connecting member is detachably connected to the first wall 211 and the protective member 213, respectively. The connecting member may be a structure such as a screw.

By providing a removable protective member 213 to protect the first vent hole 2113, a possibility of foreign matter entering the vent valve assembly 212 during production of the battery cell 20 and affecting the venting function is reduced, the reliability of the vent valve assembly 212 is improved, and the protective member 213 may be directly removed when needed, facilitating the subsequent attachment of the insulating patch 216.

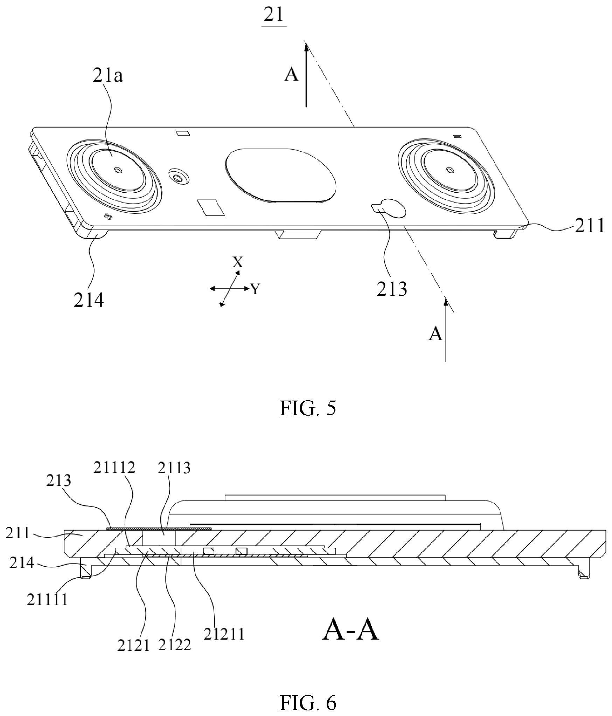

In combination with FIG. 6, FIG.10, and FIG.11, in some examples, optionally, the protective member 213 is bonded to the first surface 2111, the protective member 213 includes a protective layer 2131 and an adhesive layer 2132, and the adhesive layer 2132 is connected to a side of the protective layer 2131 facing the second surface 2112 and bonded to the second surface 2112.

The adhesive layer 2132 may be made of solid adhesive, and the protective layer 2131 may be made of metal or plastic. The protective member 213 in these embodiments is bonded to the second surface 2112 through the adhesive layer 2132. During installation of the protective member 213, the protective member 213 only needs to be pressed against the second surface 2112 of the first wall 211, and during removal, the protective member 213 may be directly removed, improving the installation efficiency and removal efficiency of the protective member 213.

In some examples, optionally, the adhesive layer 2132 in these embodiments is arranged around the first vent hole 2113.

By arranging the adhesive layer 2132 around the first vent hole 2113, the adhesive layer 2132 and the protective layer 2131 form a relatively sealed space, such that the first vent hole 2113 can be better protected, thereby further reducing a possibility that foreign matter enters the first vent hole 2113 during production of the battery cell 20.

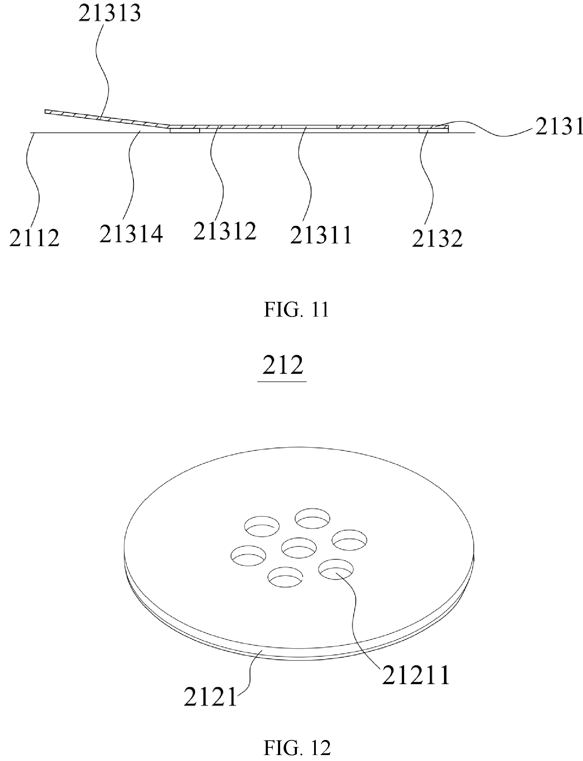

As shown in FIG. 11, in some examples, optionally, the protective layer 2131 in these embodiments includes a body 21312 and an extension tab 21313. The body 21312 is connected to the second surface 2112, and the extension tab 21313 is connected to an edge of the body 21312 and has a gap 21314 with the second surface 2112.

Formation of the gap 21314 causes the extension tab 21313 and the second surface 2112 to have no connection relationship therebetween, so that an operator can directly remove the protective member 213 by holding the extension tab 21313, thereby improving removal efficiency of the protective member 213.

The extension tab 21313 and the protective layer 2131 may be integrally connected by welding or adhesion, or may be integrally formed directly during processing. The extension tab 21313 may have a shape approximately similar to a rectangle, and may alternatively have other shapes such as a circle or a triangle, which are not enumerated one by one in these embodiments.

In some examples, optionally, from one end of the extension tab 21313 connected to the body 21312 to the other end of the extension tab 21313 away from the body 21312, a dimension of the gap 21314 in the first direction X gradually increases, and the first direction X is an arrangement direction from the first surface 2111 to the second surface.

Such a structure enables the extension tab 21313 to form an upturned structure relative to the second surface 2112, thereby further facilitating gripping of the extension tab 21313 by an operator or an operating device during removal of the protective member 213 and further improving removal efficiency of the protective member.

In some examples, optionally, the protective member 213 in these embodiments is provided with a through hole 21311, the through hole 21311 extends through the protective member 213 in the first direction X, and the first direction X is an arrangement direction from the first surface 2111 to the second surface.

The through hole 21311 may be used to communicate the first vent hole 2113 with the vent valve assembly 212, the working performance of the vent valve assembly 212 in these embodiments can be tested prior to installation of an insulating patch 216. Meanwhile, when the adhesive layer 2132 in these embodiments is arranged around the first vent hole 2113, the adhesive layer 2132 does not shield the first vent hole 2113, thereby further facilitating testing of the working performance of the vent valve assembly 212 in these embodiments.

In some examples, optionally, a maximum dimension of the through hole 21311 in these embodiments along the second direction Y is smaller than a maximum dimension of the first vent hole 2113 along the second direction Y, and the second direction Y is parallel to the first surface 2111 and parallel to or intersecting with the extending direction of the first wall 211.

That is, the diameter of the through hole 21311 in these embodiments is smaller than the diameter of the first vent hole 2113. For example, the diameter of the through hole 21311 is less than one-tenth of the aperture of the first vent hole 2113. A less diameter of the through hole 21311 indicates better blocking performance against external foreign matter. Therefore, a possibility of foreign matter directly entering the first vent hole 2113 through the through hole 21311 can be reduced.

In some examples, optionally, the maximum dimension of the through hole 21311 in these embodiments along the first direction X is less than or equal to 1 mm.

For example, the diameter of the through hole 21311 may be 1 mm, 0.5 mm, 0.1 mm, and the like. By designing the maximum dimension of the through hole 21311 along the first direction X within above numerical range, a possibility of foreign matter entering the through hole 21311 can be further reduced.

As shown in FIG. 6, FIG. 8, and FIG. 12, in some examples, optionally, the vent valve assembly 212 in these embodiments includes a first valve body 2121 and a breathable membrane layer 2122. The first valve body 2121 is connected to the first wall 211 and provided with a second vent hole 21211, the second vent hole 21211 extends through the first valve body 2121 in the first direction X and communicates with the first vent hole 2113, and the first direction X is an arrangement direction from the first surface 2111 to the second surface. The breathable membrane layer 2122 is connected to a side of the first valve body 2121 away from the first wall 211 and covers the second vent hole 21211.

The first valve body 2121 may have a disk shape as shown in the figures, and its material can be plastic or metal. The breathable membrane layer 2122 is connected to the surface of the first valve body 2121 away from the first wall 211. The breathable membrane layer 2122 and the first valve body 2121 are both sheet-like, thereby reducing a dimension of the entire vent valve assembly 212 in the first direction X.

The breathable membrane layer 2122 may allow gas to pass through in the direction from the first surface 2111 to the second surface 2112 in FIG. 6. The breathable membrane layer 2122 may be made of materials such as polypropylene, polyethylene, polytetrafluoroethylene, polyester, and polyurethane.

In these embodiments, the vent valve assembly 212 is designed to include the first valve body 2121 and the breathable membrane layer 2122. Such a configuration not only achieves a venting function, but also enables the vent valve assembly 212 to have a relatively small overall dimension in the first direction X, thereby reducing impact of the vent valve assembly 212 on installation of other auxiliary structures (such as the insulating member 214) of the end cover assembly 21.

In some examples, optionally, the first surface in these embodiments is sequentially provided with a first groove 21111 and a second groove 21112 in communication with each other along the first direction X. The second groove 21112 communicates with the first vent hole 2113. In the second direction, a maximum dimension of the first groove 21111 is greater than a maximum dimension of the second groove 21112, and a maximum dimension of the second groove 21112 is greater than a maximum dimension of the first vent hole 2113. The second direction Y is parallel to the first surface 2111 and parallel to or intersecting with the extending direction of the first wall 211. The first valve body 2121 is received in the first groove 21111.

By providing the first groove 21111 and the second groove 21112, the first valve body 2121 located in the first groove 21111 communicates with the first vent hole 2113 through the second groove 21112, and the dimensions of the first valve body 2121, the second groove 21112, and the first vent hole 2113 in the second direction gradually decrease, thereby reducing the risk of gas turbulence generated by the gas directly entering the first vent hole 2113 from the larger-sized first valve body 2121, and facilitating concentrated discharge of gas.

In some examples, optionally, a plurality of the second vent holes 21211 in these embodiments are provided. The plurality of second vent holes 21211 facilitate the discharge of gas inside the battery cell 20.

In some embodiments, one of the plurality of second vent holes 21211 is provided in the middle of the first valve body 2121, and the remaining second vent holes 21211 are arranged around the second vent hole 21211 located in the middle of the first valve body 2121.

A spacing between two adjacent second vent holes 21211 is smaller than a diameter of each second vent hole 21211. The middle of the first valve body 2121 refers to a center of the first valve body 2121 in the second direction Y. When the first valve body 2121 in these embodiments is in a disc-like structure as shown in the figure, the middle of the first valve body 2121 refers to a center position of the circle of the first valve body 2121.

By arranging the plurality of surrounding second vent holes 21211 around the middle second vent hole 21211, an arrangement density of the second vent holes 21211 can be increased to a certain extent, thereby further facilitating communication between the second vent holes 21211 and the first vent hole 2113.

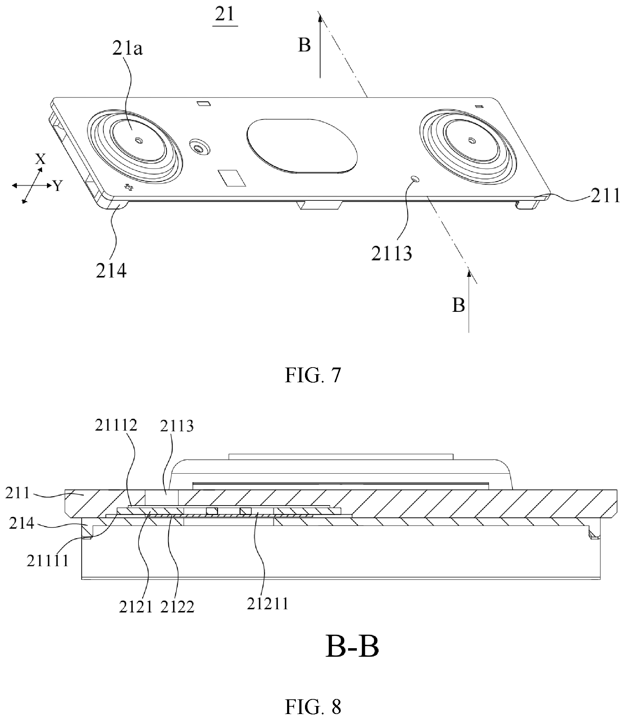

As further shown in FIG. 6 and FIG. 7, in some examples, optionally, the end cover assembly 21 in these embodiments further includes an insulating member 214. The insulating member 214 is connected to the first wall 211 and is provided with a third vent hole 2141. The vent valve assembly 212 is located between the first wall 211 and the insulating member 214 and covers the third vent hole 2141.

The insulating member 214 may optionally be made of insulating materials such as plastic and rubber. The insulating member 214 is connected to the first surface 2111 of the first wall 211, and the connection may be achieved through connecting posts as shown in the figure. The connecting posts and the first wall 211 may be in plug-in fit or threaded connection.

The insulating member 214 is provided with a venting structure 2142 disposed opposite to the first wall 211 in the first direction X. The venting structure 2142 is configured to cooperate with the pressure relief mechanism 215 to achieve pressure relief when the internal pressure reaches a threshold. Moreover, to implement venting when the internal pressure increases but does not reach the threshold for opening the pressure relief mechanism 215, the insulating member 214 in these embodiments is provided with a third vent hole 2141 communicating with the first vent hole 2113 through the vent valve assembly 212.

In this way, the insulating member 214 can be used to isolate electrical connection components inside the battery cell 20 from the first wall 211 to reduce a risk of short circuit. In addition, by arranging the vent valve assembly 212 in these embodiments between the first wall 211 and the insulating member 214, the stability of the vent valve assembly 212 after installation can be improved.

In some examples, optionally, a projection of the second vent hole 21211 in these embodiments on the insulating member 214 in the first direction X is located within the third vent hole 2141.

The projection of the second vent hole 21211 on the insulating member 214 in the first direction X may be understood as a projection on a plane on which the side of the insulating member 214 facing the first wall 211 is located, and should not be understood as meaning that the projection must be on a certain physical structure of the insulating member 214, because the presence of the third vent hole 2141 may prevent direct formation of the projection

Such a structure enables a diameter of the third vent hole 2141 to be greater than or equal to a diameter of the second vent hole 21211, thereby facilitating entry of gas inside the battery cell 20 into the vent valve assembly 212 through the third vent hole 2141 and improving venting efficiency.

In some examples, optionally, a maximum dimension a of the third vent hole 2141 along the second direction Y may also be greater than a maximum dimension b of the first vent hole 2113 along the first direction X, and the second direction Y is parallel to the first surface 2111 and parallel to or intersecting with the extending direction of the first wall 211.

That is, a diameter of the third vent hole 2141 is greater than a diameter of the above-mentioned first vent hole 2113. For example, the diameter of the third vent hole 2141 is 2-10 times the diameter of the first vent hole 2113. A relatively larger third vent hole 2141 facilitates gas inside the battery cell 20 entering the first vent hole 2113 through the third vent hole 2141 and the vent valve assembly 212, thereby improving venting efficiency.

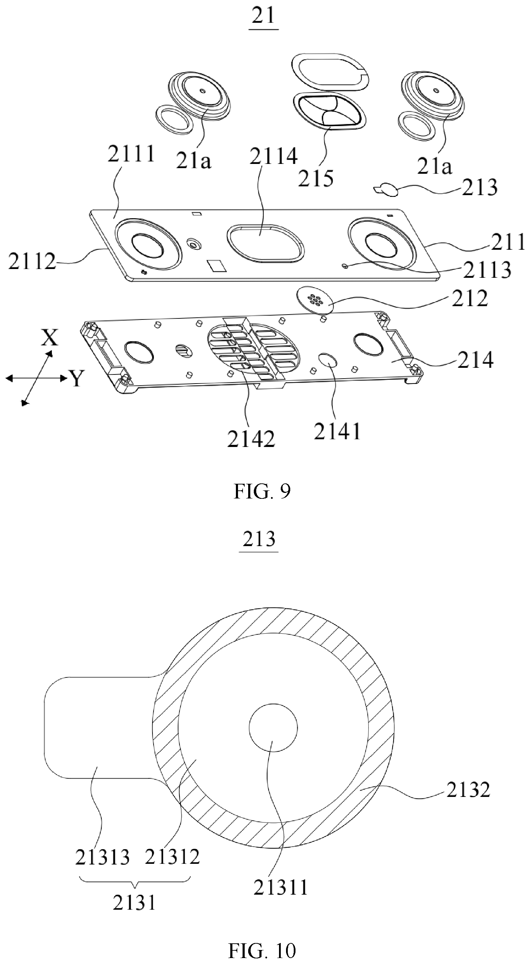

As further shown FIG. 9, in some examples, optionally, the end cover assembly 21 further includes a pressure relief mechanism 215, the first wall 211 is provided with a fourth vent hole 2114, and the pressure relief mechanism 215 is connected to the first surface 2111 and seals the fourth vent hole 2114.

The pressure relief mechanism 215 refers to an element or component that is actuated to release internal pressure or temperature when the internal pressure or temperature of the battery cell reaches a predetermined threshold. The threshold varies according to different design requirements. The threshold may depend on one or more materials in the positive electrode sheet, negative electrode sheet, electrolyte, and separator in the battery cell. The pressure relief mechanism 215 may take forms such as an explosion-proof valve, a gas valve, a pressure relief valve, or a safety valve, and may specifically employ a pressure-sensitive or temperature-sensitive element or structure. That is, when the internal pressure or temperature of the battery cell reaches the predetermined threshold, the pressure relief mechanism 215 performs an action, or a weak structure provided in the pressure relief mechanism is destroyed, thereby forming an opening or channel for releasing the internal pressure or temperature. The pressure relief mechanism 215 can be used to discharge gas when the internal pressure of the battery cell 20 is excessively high, thereby reducing a risk of rupture of the battery cell 20 due to excessive internal pressure.

Reference is made to FIG. 3 to FIG. 12. Embodiments of the present application provide a battery 100 cell, including a housing 22, an electrode assembly 23, a vent valve assembly 212, and a protective member 213. The housing 22 is provided with an accommodating cavity 222, where the housing 22 includes a first wall 211, the first wall 211 has a first surface 2111 and a second surface 2112 opposite to each other, the second surface 2112 faces outside the battery 100 cell, the first wall 211 is provided with a first vent hole 2113, and the first vent hole 2113 penetrates through the first surface 2111 and the second surface 2112. The electrode assembly 23 is accommodated in the accommodating cavity 222. The vent valve assembly 212 is connected to the first wall 211 and covers the first vent hole 2113. The protective member 213 is detachably connected to the second surface 2112 and covers the vent valve assembly 212. The protective member 213 is bonded to the second surface 2112, snap-fitted to the second surface 2112, or connected to the second surface 2112 via a connecting member, and the connecting member is detachably connected to the first wall 211 and the protective member 213, respectively. The protective member 213 is bonded to the second surface 2112, the protective member 213 includes a protective layer 2131 and an adhesive layer 2132, and the adhesive layer 2132 is connected to a side of the protective layer 2131 facing the second surface 2112 and bonded to the second surface 2112. The adhesive layer 2132 is arranged around the first vent hole 2113. The protective layer 2131 includes a body 21312 and an extension tab 21313, the body 21312 is connected to the second surface 2112, and the extension tab 21313 is connected to an edge of the body 21312 and forms a gap 21314 with the second surface 2112. From one end of the extension tab 21313 connected to the body 21312 to the other end of the extension tab 21313 away from the body 21312, a dimension of the gap 21314 in the first direction X gradually increases, and the first direction X is an arrangement direction from the first surface 2111 to the second surface. The protective member 213 is provided with a through hole 21311, the through hole 21311 extends through the protective member 213 along the first direction X, and the first direction X is an arrangement direction from the first surface 2111 to the second surface. A maximum dimension of the through hole 21311 along the second direction Y is smaller than a maximum dimension of the first vent hole 2113 along the second direction Y, and the second direction Y is parallel to the first surface 2111 and parallel to or intersecting with the extending direction of the first wall 211. The maximum dimension of the through hole 21311 along the second direction Y is less than or equal to 1 mm. The vent valve assembly 212 includes a first valve body 2121 and a breathable membrane layer 2122, where the first valve body 2121 is connected to the first wall 211 and provided with a second vent hole 21211, the second vent hole 21211 extends through the first valve body 2121 in the first direction X and communicates with the first vent hole 2113, and the first direction X is an arrangement direction from the first surface 2111 to the second surface; and the breathable membrane layer 2122 is connected to a side of the first valve body 2121 away from the first wall 211 and covers the second vent hole 21211. The first surface 2111 is sequentially provided with a first groove 21111 and a second groove 21112 in communication with each other along the first direction X, the second groove 21112 communicates with the first vent hole 2113, in the second direction Y, a maximum dimension of the first groove 21111 is greater than a maximum dimension of the second groove 21112, a maximum dimension of the second groove 21112 is greater than a maximum dimension of the first vent hole 2113, and the second direction Y is parallel to the first surface 2111 and parallel to or intersecting with the extending direction of the first wall 211; and the first valve body 2121 is at least partially received in the first groove 21111. A plurality of the second vent holes 21211 are provided. One of the plurality of second vent holes 21211 is located in a middle of the first valve body 2121, and the remaining second vent holes 21211 are arranged around the second vent hole 21211 located in the middle of the first valve body 2121. The battery 100 cell further includes an insulating member 214 connected to the first wall 211, the insulating member 214 is provided with a third vent hole 2141, and the vent valve assembly 212 is located between the first wall 211 and the insulating member 214 and communicates with the third vent hole 2141. A projection of the second vent hole 21211 on the insulating member 214 in the first direction X is located within the third vent hole 2141. The battery 100 cell further includes a pressure relief mechanism 215, the first wall 211 is provided with a fourth vent hole 2114, and the pressure relief mechanism 215 seals the fourth vent hole 2114. The first wall 211 is an end cover body of the end cover assembly 21 or a wall of the housing 22.

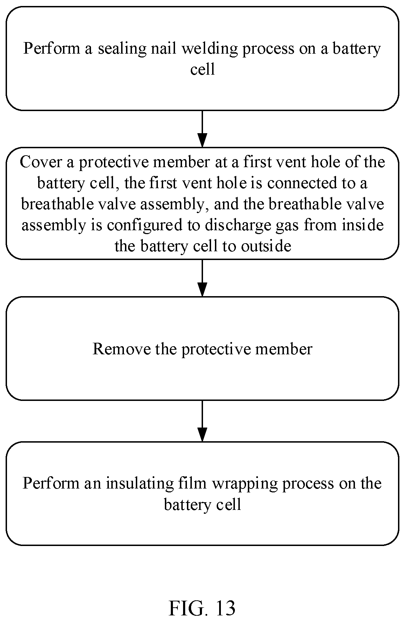

Finally, as shown in FIG. 13, based on the above battery cell 20, battery 100, and electrical apparatus, embodiments of the present application further provide a battery 100 cell production method, including the following steps:
covering a protective member 213 over a first vent hole 2113 of a battery 100 cell, where the first vent hole 2113 is in communication with a vent valve assembly 212, and the vent valve assembly 212 is configured to discharge gas from inside the battery 100 cell to outside; and
removing the protective member 213.

In some examples, optionally, before the removing the protective member 213, the method further includes performing a sealing nail welding process on the battery 100 cell. The sealing nail is configured to seal the liquid injection hole, and the sealing nail may be made of an insulating material or a non-insulating material. The sealing nail may be welded to the end cover assembly 21.

In some examples, optionally, after the removing the protective member 213, the method further includes performing an insulating film wrapping process on the battery 100 cell. The insulating film may be a blue film.

It should be noted that in absence of conflicts, the embodiments and features in the embodiments in the present application may be combined with each other.

In conclusion, it should be noted that the above embodiments are merely intended for describing the technical solutions of the present application, but not for limiting the present application. Although the present application has been described in detail with reference to the foregoing embodiments, persons of ordinary skills in the art should understand that it is still possible to make modifications to the technical solutions described in the foregoing embodiments or to make equivalent substitutions to some of the technical features thereof, but these modifications or substitutions do not make the nature of the respective technical solutions depart from the spirit and scope of the technical solutions of the embodiments of the present application.

## Claims

1. A battery cell, comprising:
a housing provided with an accommodating cavity, wherein the housing comprises a first wall, the first wall has a first surface and a second surface opposite to each other, the second surface faces outside the battery cell, the first wall is provided with a first vent hole, and the first vent hole extends through the first surface and the second surface;
an electrode assembly accommodated in the accommodating cavity;
a vent valve assembly connected to the first wall and covering the first vent hole; and
a protective member detachably connected to the second surface and covering the vent valve assembly.

2. The battery cell according to claim 1, wherein the protective member is bonded to the second surface, snap-fitted to the second surface, or connected to the second surface via a connecting member, and the connecting member is detachably connected to the first wall and the protective member, respectively.

3. The battery cell according to claim 2, wherein the protective member is bonded to the second surface, the protective member comprises a protective layer and an adhesive layer, and the adhesive layer is connected to a side of the protective layer facing the second surface and bonded to the second surface.

4. The battery cell according to claim 3, wherein the adhesive layer is arranged around the first vent hole.

5. The battery cell according to claim 3 or 4, wherein the protective layer comprises a body and an extension tab, the body is connected to the second surface, and the extension tab is connected to an edge of the body and forms a gap with the second surface.

6. The battery cell according to claim 5, wherein from one end of the extension tab connected to the body to the other end of the extension tab away from the body, a dimension of the gap in a first direction gradually increases, and the first direction is an arrangement direction from the first surface to the second surface.

7. The battery cell according to claim 3, wherein the protective layer is provided with a through hole, the through hole extends through the protective member along a first direction, and the first direction is an arrangement direction from the first surface to the second surface.

8. The battery cell according to claim 7, wherein a maximum dimension of the through hole along a second direction is smaller than a maximum dimension of the first vent hole along the second direction, and the second direction is parallel to the first surface and parallel to or intersecting with an extending direction of the first wall.

9. The battery cell according to claim 8, wherein the maximum dimension of the through hole along the second direction is less than or equal to 1 mm.

10. The battery cell according to any one of claims 1 to 9, wherein the vent valve assembly comprises:
a first valve body connected to the first wall and provided with a second vent hole, wherein the second vent hole extends through the first valve body along a first direction and communicates with the first vent hole, and the first direction is an arrangement direction from the first surface to the second surface;
a breathable membrane layer connected to a side of the first valve body away from the first wall and covering the second vent hole.

11. The battery cell according to claim 10, wherein the first surface is sequentially provided with a first groove and a second groove in communication with each other along the first direction, the second groove communicates with the first vent hole, in the second direction, a maximum dimension of the first groove is greater than a maximum dimension of the second groove, a maximum dimension of the second groove is greater than a maximum dimension of the first vent hole, and the second direction is parallel to the first surface and parallel to or intersecting with an extending direction of the first wall; and the first valve body is at least partially received in the first groove.

12. The battery cell according to claim 11, wherein a plurality of the second vent holes are provided.

13. The battery cell according to claim 12, wherein one of the plurality of second vent holes is located in a middle of the first valve body, and the remaining second vent holes are arranged around the second vent hole located in the middle of the first valve body.

14. The battery cell according to claim 10, wherein the battery cell further comprises an insulating member connected to the first wall, the insulating member is provided with a third vent hole, and the vent valve assembly is located between the first wall and the insulating member and communicates with the third vent hole.

15. The battery cell according to claim 14, wherein a projection of the second vent hole on the insulating member along the first direction is located within the third vent hole.

16. The battery cell according to any one of claims 1 to 15, wherein the battery cell further comprises a pressure relief mechanism, the first wall is provided with a fourth vent hole, and the pressure relief mechanism seals the fourth vent hole.

17. The battery cell according to any one of claims 1 to 16, wherein the first wall is an end cover body of an end cover assembly or a wall of the housing.

18. A battery, comprising the battery cell according to claim 17.

19. An electrical apparatus, comprising the battery according to claim 18, wherein the battery is configured to supply electrical energy.

20. A battery cell production method, comprising the following steps:
covering a protective member over a first vent hole of a battery cell, wherein the first vent hole is in communication with a vent valve assembly, and the vent valve assembly is configured to discharge gas from inside the battery cell to outside;
removing the protective member.

21. The battery cell production method according to claim 20, wherein before the removing the protective member, the method further comprises performing a sealing nail welding process on the battery cell.

22. The battery cell production method according to claim 20 or 21, wherein after the removing the protective member, the method further comprises performing an insulating film wrapping process on the battery cell.
